# EUROPÄISCHE PATENTSCHRIFT

(11) **EP 2 285 623 B1**
(45) Veröffentlichungstag und Bekanntmachung des Hinweises auf die Patenterteilung: **23.05.2012**
(21) Anmeldenummer: 08874457.8
(22) Anmeldetag: 17.11.2008
(51) Int. Cl.: B60R 11/00, F16B 21/02, H01Q 1/12

(54) **HALTERUNG FÜR EIN KRAFTFAHRZEUG-ANBAUTEIL UND VORRICHTUNG ZUM HALTEN EINES KRAFTFAHRZEUG-ANBAUTEILS**
HOLDER FOR A MOTOR VEHICLE ADD-ON PART AND DEVICE FOR HOLDING A MOTOR VEHICLE ADD-ON PART
FIXATION POUR UNE PIÈCE RAPPORTÉE D UN VÉHICULE ET DISPOSITIF POUR TENIR UNE PIÈCE RAPPORTÉE DE VÉHICULE

(30) Priorität: 30.05.2008 DE 102008002132
(43) Veröffentlichungstag der Anmeldung: 23.02.2011
(73) Patentinhaber: Blaupunkt Antenna Systems GmbH & Co. KG, 31137 Hildesheim (DE)
(72) Erfinder: LERCHNER, Henry, 30171 Hannover (DE)
(74) Vertreter: Flach, Dieter Rolf Paul
(86) Internationale Anmeldenummer: PCT/EP2008/065656
(87) Internationale Veröffentlichungsnummer: WO 2009/143905

(56) Entgegenhaltungen:
- EP-A- 0 351 192
- EP-A- 1 916 737
- DE-A1- 19 545 041
- DE-A1- 19 838 560
- DE-A1-102006 009 660
- US-A- 5 448 804

## Beschreibung

Die Erfindung betrifft eine Halterung für ein Kraftfahrzeug-Anbauteil zur Montage an einem mit einer Aufnahmeöffnung versehenen Karosserieteil des Kraftfahrzeugs, mit zwei, entgegengesetzten Seiten des Karosserieteils zuordenbaren Abstützelementen, die mittels einer Spanneinrichtung aufeinander zu spannbar sind. Ferner umfasst die Erfindung eine Vorrichtung zum Halten eines Kraftfahrzeug-Anbauteils.

### Stand der Technik

Halterungen für ein Kraftfahrzeug-Anbauteil der eingangs genannten Art sind bekannt, beispielsweise aus DE 102 10 628, DE 102 10 593 oder EP 1 329 978. Sie dienen dazu, ein Kraftfahrzeug-Anbauteil an einem Karosserieteil des Kraftfahrzeugs zu befestigen. Häufig werden dabei mehrteilige Halterungsvorrichtungen verwendet. Diese machen es notwendig, dass zunächst ein erstes Teil der Halterungsvorrichtung in eine Aufnahmeöffnung des Karosserieteils eingebracht und dort gesichert wird. In einem weiteren Schritt wird anschließend ein zweites Teil, das zur endgültigen Befestigung des ersten Teils dient, auf einer zweiten Seite des Karosserieteils angeordnet und an dem ersten Teil der Halterungsvorrichtung befestigt. Dies kann über eine beliebige Befestigungsvorrichtung, beispielsweise über eine Verschraubung, durchgeführt sein. Häufig werden zur Befestigung auch Klemmeinrichtungen mit federnden beziehungsweise elastischen Elementen eingesetzt, die mit der Zeit ihre Spannkraft verlieren können beziehungsweise während einer Demontage Probleme bereiten. Auch erfolgt häufig eine Krafteinleitung der Klemmeinrichtung nicht direkt, sondern beispielsweise über eine Aufspreizung des elastischen Elements. Die beiden Teile der Halterungsvorrichtung können bei dieser Ausführungsvariante von der Befestigungsvorrichtung nicht beliebig weit aufeinander zu bewegt und das Karosserieteil zwischen ihnen eingespannt werden. Eine Befestigung erfolgt vielmehr nur durch eine Aufweitung der elastischen Elemente in einer Öffnung des Karosserieteils, womit lediglich eine kleine Auflagefläche - nämlich die Oberfläche der Öffnung in dem Karosserieteil - zum Verspannen des Anbauteils zur Verfügung steht. Dies macht eine Anpassung der Halterung an das jeweilige Karosserieteil notwendig, womit sie nicht universell, beispielsweise zwischen verschiedenen Kraftfahrzeug-Baureihen, einsetzbar ist. Eine Ausführung mit Klemmeinrichtung macht es möglicherweise auch notwendig, eine mehrteilige Ausführung zu wählen, bei der die Spanneinrichtung, beispielsweise eine Schraube, erst nach dem Einsetzen der Halterung in die Aufnahmeöffnung des Karosserieteils zu montieren. Nachteilig ist auch die in der DE 102 10 593 beschriebene Notwendigkeit, spezielle Kunststoffe für die Klemmeinrichtung vorsehen zu müssen. Die Klemmeinrichtung ist nicht unerheblichen Kräften ausgesetzt, denen gewöhnliche Kunststoffe möglicherweise nicht Stand halten würden. Bei Verwendung einer spreizbaren Klemmeinrichtung werden dem Konstrukteur ausserdem zusätzliche Beschränkungen hinsichtlich der Grösse und der Form der Halterung auferlegt. Es ist offensichtlich, dass eine, beispielsweise durch eine Schraube gespreizte Klemmeinrichtung hinsichtlich ihres Durchmessers nicht beliebig gross gebaut werden kann. Auch die Form der Klemmeinrichtung muss üblicherweise an die Form eines Befestigungsmittels, also üblicherweise einer Schraube, angepasst werden und ist somit zumindest nahezu kreisförmig.

Eine gattungsbildende Automobilantenneneinrichtung ist aus der EP 0 351 192 A2 bekannt geworden. Diese vorbekannte Halterung für eine Kraftfahrzeugantenne weist zwei Abschnittselemente auf, die an zwei gegenüberliegenden Seiten des Karosserieteils, an dem die Kraftfahrzeugantenne montiert werden soll, abgestützt werden können. Dazu ist eine Spannvorrichtung vorgesehen, worüber die Abstützteile aufeinander zu spannbar sind. Die Abstützelemente sind dabei starr ausgebildet und um eine Verdrehachse verdrehbar gelagert. Die Abstützelemente weisen dazu um die Verdrehachse herum verlaufend mehrere zueinander separierte Abstützflächen auf. Die Außenkontur des ersten Abschnittelements ist dabei zwischen den Abstützflächen in Richtung auf die Verdrehachse zurücktretend ausgebildet.

Ausgehend von diesem gattungsbildenden Stand der Technik stellt sich die vorliegende Erfindung die Aufgabe, eine verbesserte Halterung für ein Kraftfahrzeuganbauteil zu schaffen, das eine gegenüber dem Stand der Technik erleichterte und dennoch sichere, dauerhafte Montage bietet. Die Aufgabe wird erfindungsgemäß bezüglich einer Halterung entsprechend den im Anspruch 1 und bezüglich einer Vorrichtung zum Halten eines Kraftfahrzeuganbauteils entsprechend den im Anspruch 10 angegebenen Merkmalen gelöst. Vorteilhafte Ausgestaltungen der Erfindung sind in den Unteransprüchen angegeben.

### Offenbarung der Erfindung

Die erfindungsgemässe Halterung für ein Kraftfahrzeug-Anbauteil weist die beschriebenen Nachteile nicht auf. Es ist insbesondere einteilig und auf einfache Weise von einer einzelnen Person ohne Weiteres zu montieren. Abstützelemente und Spanneinrichtung stellen keine besonderen Anforderungen an das Material. Besonders hervorzuheben ist die direkte Krafteinleitung der Spanneinrichtung in die Halterung. Bei der erfindungsgemässen Halterung bildet eines der Abstützelemente ein erstes Abstützelement, das starr ausgebildet, um eine Verdrehachse verdrehbar gelagert und über seinen um die Vertikalachse verlaufenden Umfang herum mehrere zueinander separierte Abstützflächen aufweist, wobei die Außenkontur des ersten Abstützelementes zwischen den Abstützflächen in Richtung auf die Vertikalachse zurücktritt. Das heißt, dass sich während eines Spannvorgangs der Spanneinrichtung die Abstützelementen aufeinander zu bewegen und Bereiche des Karosserieteils zwischen sich aufnehmen. Die Spanneinrichtung kann dabei soweit angespannt werden, bis ein ausreichend fester Sitz, insbesondere durch Presspassung, des Karosserieteils zwischen den Abstützelementen erreicht ist. Dabei ist eines der Abstützelemente starr, also nicht nachgiebig, ausgebildet. Es weist also nur eine geringe Elastizität auf. Es ist weiterhin um eine Verdrehachse verdrehbar gelagert, so dass es gegenüber dem anderen Abstützelement verdreht, das heißt in eine andere Winkelstellung gebracht, werden kann. Das Abstützelement tritt über Abstützflächen mit dem Karosserieteil in Kontakt, wobei mehrere Abstützflächen vorliegen, die zueinander separiert sind und über einen um die Vertikalachse verlaufenden Umfang verteilt sind. Die Außenkontur des Abstützelements kann stetig ausgebildet sein, tritt aber in Bereichen, in denen keine Abstützflächen vorgesehen sind, in Richtung auf die Vertikalachse zurück. Daraus ergeben sich zwischen den Abstützelementen Ausnehmungen in dem Abstützelement. In dem Karosserieteil ist eine auf die Halterung abgestimmte Ausnehmung vorgesehen. Das bedeutet, dass die Ausnehmung derart ausgebildet ist, dass das erste Abstützelement durch die Öffnung hindurchbewegt werden kann und somit auf die ihm zugeordnete Seite des Karosserieteils gelangt, und dass das zweite Abstützelement bedingt durch seine Abmaße nicht durch die Ausnehmung hindurch bewegt werden kann, sondern auf der ihm zugeordneten Seite des Karosserieteils verbleibt. Die Ausnehmung ist insbesondere derart ausgeformt, dass das erste Abstützelement zunächst durch die Ausnehmung hindurch bewegt werden kann und danach um eine Verdrehachse verdreht wird. Im Anschluss an diese Verdrehung sind die Abstützflächen des ersten Abstützelements nicht mehr über der Ausnehmung positioniert, so dass die Abstützflächen auf dem Karosserieteil aufsetzen und das erste Abstützelement auf der ihm zugeordneten Seite des Karosserieteils fixieren. In einem weiteren Schritt werden die Abstützelemente mittels der Spanneinrichtung aufeinander zu bewegt, wodurch das erste Abstützelement sowie die Abstützflächen des zweiten Abstützelements in Kontakt, insbesondere Presskontakt, mit der ihnen zugeordneten Seite des Karosserieteils treten. Die Abstützelemente werden mit der Spanneinrichtung soweit aufeinander zu bewegt, dass ein sicherer Halt der Abstützelemente an dem Karosserieteil gegeben ist.

Erfindungsgemäß ist weiterhin vorgesehen, dass das andere Abstützelement ein zweites Abstützelement bildet, das Auflageflächen aufweist. Es ist beispielsweise vorgesehen, dass das zweite Abstützelement nicht vollflächig, sondern lediglich über seine Auflageflächen mit dem Karosserieteil des Kraftfahrzeugs in Kontakt tritt. Durch die Auflagefläche kann eine gewisse Beabstandung des zweiten Abstützelements von dem Karosserieteil vorliegen. Besonders vorteilhaft ist es, wenn die Auflageflächen des zweiten Abstützelementes derart angeordnet sind, dass sie den Abstützflächen des ersten Abstützelements gegenüber liegen beziehungsweise auf der gegenüberliegenden Seite des Karosserieteils angeordnet sind. Sofern zwischen dem zweiten Abstützelement und dem Karosserieteil ein Abstand vorgesehen ist, kann somit verhindert werden, dass sich das Karosserieteil durch eine Krafteinwirkung der Spanneinrichtung verformt. Dies bedeutet, dass vorzugsweise ebenso viele Auflageflächen wie Abstützflächen vorhanden sind. Es kann aber auch vorgesehen sein, dass die Auflagefläche eine andere Form einnimmt, beispielsweise einen ununterbrochenen Ring ausbildet oder nicht gegenüber von den Abstützflächen ausgebildet ist.

Erfindungsgemäß ist ferner vorgesehen, dass das erste Abstützelement vor einem Montagevorgang eine erste Winkelstellung einnimmt, in der die Abstützflächen nicht über den Auflageflächen positioniert sind, und nach dem Montagevorgang eines zweite, von der ersten Winkelstellung verschiedene Winkelstellung einnimmt. Es ist insbesondere vorgesehen, dass das erste Abstützelement in der ersten Winkelstellung durch die Aufnahmeöffnung des Karosserieteils bewegt werden kann, während in der zweiten Winkelstellung das Abstützelement derart angeordnet ist, dass ein Herausbewegen aus der Aufnahmeöffnung verhindert ist. Beispielsweise kann eine Verdrehung des ersten Abstützelements von der ersten in die zweite Winkelstellung manuell, das heißt von Hand durch den Monteur, erfolgen.

Eine Weiterbildung der Erfindung sieht vor, dass das erste Abstützelement als Abstützkralle mit mehreren Krallenarmen ausgebildet ist. Dabei ist mindestens ein Krallenarm vorgesehen, die Abstützkralle kann aber auch eine beliebige Anzahl von Krallenarmen aufweisen. Die Abstützkralle ist beispielsweise derart ausgebildet, dass die Krallenarme zunächst horizontal in radialer Richtung nach Außen verlaufen, um anschließend vertikal in Richtung des zweiten Abstützelements abgebogen zu sein. Dabei kann der Winkel der Abbiegung in Abhängigkeit von einer gewünschten Flexibilität des Abstützelements gewählt werden. So ist beispielsweise bei einer Abbiegung von 90° nur eine geringe Flexibilität gegeben, während die Federwirkung bei einem Winkel der kleiner ist als 90° größer ist.

Eine Weiterbildung der Erfindung sieht vor, dass an den Enden der Krallenarmen die Abstützflächen liegen. Es kann auch vorgesehen sein, dass ein Krallenarm mehrere Abstützflächen aufweist.

Eine Weiterbildung der Erfindung sieht vor, dass die Abstützkralle sternförmig ausgebildet ist. Eine sternförmige Ausbildung ist insofern vorteilhaft, als dass die Krallenarme gleichmäßig über den Umfang der Abstützkralle verteilt sind. Beispielsweise kann eine Ausbildungsform mit vier Krallenarmen vorgesehen sein, bei der jeweils zwei Krallenarme diametral gegenüberliegen und das eine Krallenarmpaar gegenüber dem anderen Krallenarmpaar um einen Winkel von 90° verdreht ist. Generell sind allerdings Ausführungsformen der Abstützkralle mit beliebig vielen Krallenarmen in beliebigen Positionen vorgesehen.

Eine Weiterbildung der Erfindung sieht vor, dass dem zweiten Abstützelement eine Vorverrastung zum Halten an einer Aufnahmeöffnung zugeordnet ist. Über die Vorverrastung wird während dem Montagevorgang, nach dem Einbringen des zweiten Abstützelements durch die Aufnahmeöffnung aber vor dem Spannvorgang der Spanneinrichtung, eine Sicherung der Halterung in der Aufnahmeöffnung sichergestellt. Folglich wird die Halterung zunächst in die Aufnahmeöffnung eingebracht, bis die Vorverrastung eine Rastverbindung zwischen dem zweiten Abstützelement und der Aufnahmeöffnung beziehungsweise dem die Aufnahmeöffnung umgebenden Karosserieteil herstellt. Nachfolgend kann dann die Verdrehung des ersten Abstützelements vorgenommen werden und die beiden Abstützelemente mittels der Spanneinrichtung aufeinander zu bewegt und damit verspannt werden.

Eine Weiterbildung der Erfindung sieht vor, dass die Vorverrastung mindestens eine Rastfedernase aufweist. Die Rastfedernase verfügt vorzugsweise über einen Vorsprung, der das Karosserieteil hintergreift und so eine Rastverbindung beziehungsweise eine Vorverrastung zwischen Karosserieteil und dem zweiten Abstützelement herstellt. Vorzugsweise weist die Rastfedernase eine Schrägfläche sowie eine Federwirkung auf. Während des Einbringens der Halterung in die Aufnahmeöffnung tritt die Schrägfläche mit einer Berandung der Aufnahmeöffnung in Kontakt, wodurch die Rastfedernase federnd ausgelenkt wird. Dadurch ist eine einfache Einbringung gewährleistet. Wird das zweite Abstützelement weiter in die Aufnahmeöffnung eingebracht so dass die Berandung der Aufnahmeöffnung hinter dem Vorsprung zu liegen kommt, so wird die Rastfedernase durch ihre Federwirkung wieder in Richtung der Berandung gedrückt womit die Rastfedernase beziehungsweise der Vorsprung der Rastfedernase die Berandung der Aufnahmeöffnung hintergreift und somit die Halterung in der Aufnahmeöffnung sichert.

Eine Weiterbildung der Erfindung sieht vor, dass die Spanneinrichtung eine Verschraubung ist. Über die Verschraubung können die beiden Abstützelemente beispielsweise direkt miteinander verbunden sein. Damit ist eine direkte Krafteinleitung in die Halterung gewährleistet und somit eine feste und dauerhafte Verbindung. Dabei ist eine Verschraubung bereits in einem Auslieferungszustand der Halterung vorhanden, so dass kein Vormontage-Schritt notwendig ist.

Eine Weiterbildung der Erfindung sieht vor, dass das erste Abstützelement durch die Spanneinrichtung in die zweite Winkelstellung drehbar ist. Das bedeutet, dass sich das erste Abstützelement in die zweite Winkelstellung verdreht, sobald die Spanneinrichtung betätigt wird. Dabei kann die Drehung beispielsweise aufgrund der Translation der Spanneinrichtung, insbesondere einer Schraube, als auch aufgrund der Rotation der Spanneinrichtung erfolgen. Dies ermöglicht eine schnelle und einfache Montage mit wenigen Arbeitsschritten.

Eine Weiterbildung der Erfindung sieht vor, dass das erste Abstützelement in der ersten und der zweiten Winkelstellung mittels einer Rasteinrichtung verrastbar ist. Um eine allzu leichtgängige und damit unbeabsichtigt durchführbare Verdrehung des ersten Abstützelementes zu verhindern, ist eine Rasteinrichtung vorgesehen, die das erste Abstützelement in der ersten beziehungsweise der zweiten Winkeleinstellung hält. Dabei ist es vorgesehen, dass sich eine Rastverbindung der Rasteinrichtung mit einem bestimmten Kraftaufwand lösen lässt. Das heißt, dass das erste Abstützelement sich aus einer Rastposition in der ersten und/oder der zweiten Winkelstellung lösen lässt und danach zunächst frei verdrehbar ist. Wird die erste oder die zweite Winkelstellung nach einer Verdrehung erreicht, so verrastet das erste Abstützelement wiederum mit der Rasteinrichtung, so dass die neue Winkelstellung zunächst gehalten wird.

Weiter betrifft die Erfindung eine Vorrichtung zum Halten eines Kraftfahrzeug-Anbauteils mit einer Halterung nach den vorstehenden Ausführungen, und mit einem Karosserieteil des Kraftfahrzeugs, wobei das Karosserieteil eine nicht-rotationssymetrische Aufnahmeöffnung aufweist, wobei die Halterung ein verdrehbar gelagertes Abstützelement aufweist, das in einer ersten Winkelstellung die Aufnahmeöffnung passieren kann und sich in einer zweiten Winkelstellung auf einem Randbereich der Aufnahmeöffnung abstützt. Die Aufnahmeöffnung ist derart ausgebildet, dass das erste Abstützelement in der ersten Winkelstellung, jedoch nicht in der zweiten Winkelstellung durch die Aufnahmeöffnung bewegt werden kann. Dies wird dadurch erreicht, dass sie nicht-rotationssymmetrisch ausgebildet ist. Beispielsweise ist eine im Wesentlichen polygonale Ausbildungsform vorgesehen. Dabei ist die Ausbildung der Aufnahmeöffnung auf die Außenkontur des ersten Abstützelements abgestimmt. Vorteilhafterweise können an den Stellen des Karosserieteils, an denen die Abstützflächen des ersten Abstützelements in der zweiten Winkelstellung positioniert sind, Ausnehmungen geringer Tiefe in dem Karosserieteil vorgesehen sein, um die Abstützelemente vor einer Verschiebung zu sichern.

Eine Weiterbildung der Erfindung sieht vor, dass die Aufnahmeöffnung als Mehreckloch, insbesondere Viereckloch ausgebildet ist.

### Kurze Beschreibung der Zeichnungen

Die Zeichnungen veranschaulicht die Erfindung anhand eines Ausführungsbeispiels, und zwar zeigt
- Figur 1: eine perspektivische Ansicht einer Halterung für ein Kraftfahrzeug-Anbauteil mit zwei Abstützelementen und einer Spanneinrichtung vor einer Montage,
- Figur 2: ein erstes, als Abstützkralle ausgebildetes Abstützelement der Halterung mit einer Führungseinrichtung,
- Figur 3: die Abstützkralle,
- Figur 4: die Führungseinrichtung,
- Figur 5: ein zweites Abstützelement der Halterung,
- Figur 6: die Halterung für ein Kraftfahrzeug-Anbauteil nach der Montage an einem Karosserieteil des Kraftfahrzeugs.

### Ausführungsform(en) der Erfindung

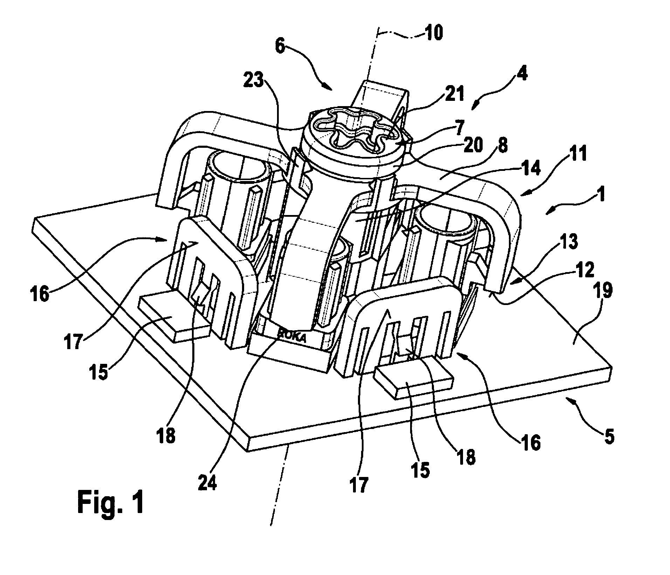

Figur 1 zeigt eine Halterung 1 zur Befestigung eines Kraftfahrzeug-Anbauteils an einem mit einer, hier nicht dargestellten Aufnahmeöffnung 2 versehenen, ebenfalls nicht dargestellten Karosserieteil 3 des Kraftfahrzeugs. Die Halterung 1 setzt sich aus zwei Abstützelementen 4 und 5 zusammen, wobei das Bezugszeichen 4 ein erstes Abstützelement und das Bezugszeichen 5 ein zweites Abstützelement bezeichnet. Die Abstützelemente 4 und 5 sind mittels einer Spanneinrichtung 6, die hier als Verschraubung 7 ausgebildet ist, aufeinander zu bewegbar und gegeneinander verspannbar. Das erste Abstützelement 4 ist als Abstützkralle 8 ausgebildet. Diese weist mehrere, in diesem Fall vier, Krallenarme 9 auf, die starr ausgebildet sind. Sie verlaufen zunächst, in Bezug auf eine Verdrehachse 10 des ersten Abstützelements 4, in radialer Richtung nach Außen, bevor sie an einer, vorzugsweise für alle Krallenarme 9 ähnlichen, Abkantposition 11 umgebogen sind und danach in Richtung des zweiten Abstützelements 5 verlaufen. Ein Abbiegewinkel an der Abkantposition 11 kann dabei beliebig gewählt sein, hier ist ein Winkel von 90° dargestellt. Das erste Abstützelement 4 weist Abstützflächen 12 auf, die hier an Enden 13 der Krallenarme 9 vorgesehen sind. Das erste Abstützelement 4 ist gegenüber dem zweiten Abstützelement 5 um die Verdrehachse 10 verdrehbar gelagert. Dabei erfolgt eine Führung über ein Führungselement 14. Das zweite Abstützelement 5 weist Auflageflächen 15 auf, die über den Umfang verteilt sind. In dem hier dargestellten Beispiel sind vier Auflageflächen 15 vorgesehen. Weiter weist das zweite Abstützelement 5 eine Vorverrastung 16 auf, die über eine Führungsfläche 17 und mindestens eine Rastfedernase 18 verfügen kann. Auflageflächen 15 und Vorverrastung 16 sind auf einer Grundplatte 19 angeordnet.

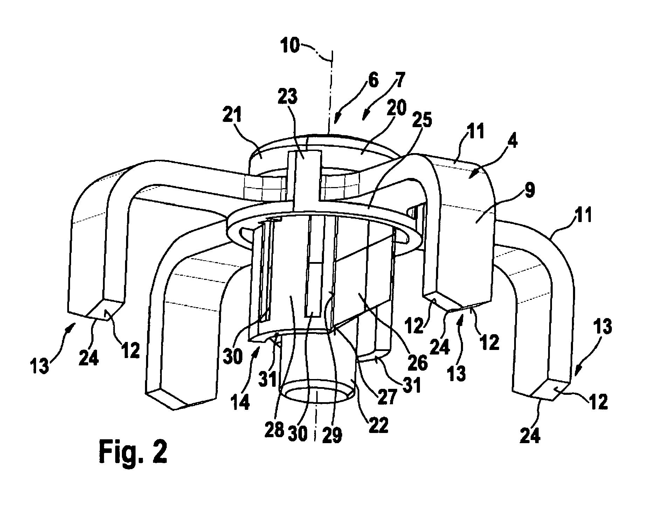

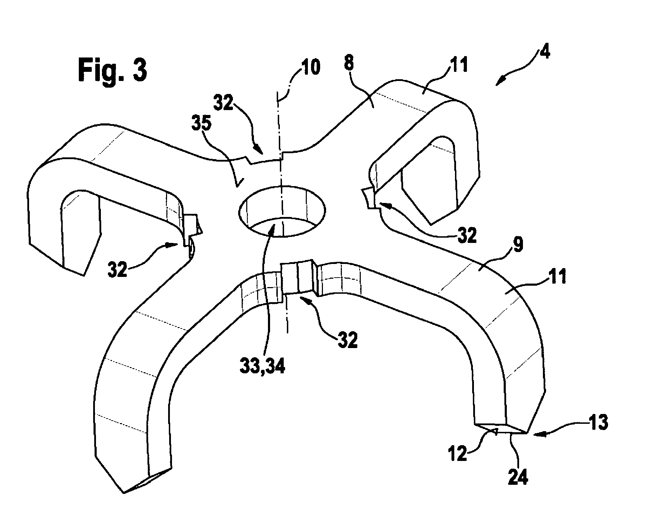

Figur 2 zeigt das erste Abstützelement 4, das Führungselement 14 und eine Schraube 20 der Verschraubung 7. Die Schraube 20 verfügt auf ihrer einen Seite über einen Kopf 21, auf der anderen Seite ist ein Gewinde 22 vorgesehen. Die Schraube 20 durchgreift sowohl das erste Abstützelement 4 als auch das Führungselement 14 und weist in vertikaler Richtung eine größere Ausdehnung auf als die Kombination der beiden Elemente 4 und 14. Es ist erkennbar, dass das erste Abstützelement 4 von Rastnasen 23 des Führungselements 14 gegenüber diesem sowohl in axialer als auch in radialer Richtung gegen eine Verschiebung gesichert ist. Gleichzeitig liegt auch, wie nachfolgend anhand von Figur 3 beschrieben, eine Verdrehsicherung des ersten Abstützelements 4 gegenüber dem Führungselement 14 vor. Die Rastnasen 23 sind elastisch ausgebildet, so dass das erste Abstützelement 4 einfach in die Rastnasen 23 des Führungselements 14 eingerastet beziehungsweise eingeclipst werden kann. Die Abstützflächen 12, die am Ende 13 der Krallenarme 9 vorgesehen sind, können gegeneinander angewinkelt sein, wodurch eine Aufsetzkante 24 ausgebildet wird. Es ist erkennbar, dass das erste Abstützelement 4 im Wesentlichen eine sternförmige Abstützkralle 8 ausbildet. In anderen Ausführungsformen können aber ohne Weiteres eine andere Anzahl von Krallenarmen 9 oder eine andere Ausrichtung der Krallenarme 9 verwendet werden. Es ist also nicht notwendig, dass die Krallenarme 9 gleichmäßig über den Umfang des ersten Abstützelements 4 verteilt sind. Das Führungselement 14, das über die die Rastnasen 23 an dem ersten Abstützelement 4 befestigt ist, weist in dieser Ausführungsform eine im Wesentlichen kreisrunde Ausbildung auf, den größten Durchmesser bildet dabei ein Haltering 25 aus. An diesem Haltering 25 sind die Rastnasen 23 ausgebildet. Unterhalb des Halterings 25 ist eine Absenkführung 26 mit einer Absenkführungsfläche 27 vorgesehen. Die Absenkführungsfläche 27 ist gegenüber dem Führungselement 14 beziehungsweise dessen Haltering 25 angewinkelt. Über den Umfang des Führungselements 14 sind mehrere Absenkführungen 26 vorgesehen, die im Wesentlichen ebenfalls einen kreisrunden Umfang aufweisen, aber nicht umfänglich durchgehend sein müssen. Benachbart zu der Absenkführung 26 sind, gegenüber dieser im Umfang zurücktretende, Verdrehführungen 28 angeordnet. Durch den gegenüber der Absenkführung 26 zurücktrendenden Durchmesser bilden sich an einer Übergangsstelle zwischen Absenkführung 26 und Verdrehführung 28 Verdrehendanschlagsflächen 29 aus. Die Verdrehführung 28 weist neben den Verdrehendanschlagsflächen 29 auch Verdrehrastpositionen auf, die über Verdrehrastausnehmungen 30 gebildet sind. Weiter sind an dem ersten Abstützelement 4 Vertikalendanschlagsflächen 31 angeordnet, die in diesem Fall auf der Unterseite der Verdrehführung 28 positioniert sind.

Die Figur 3 zeigt eine Detailansicht des ersten Abstützelements 4, das als Abstützkralle 8 ausgebildet ist. In Ergänzung zu den vorherstehenden Ausführungen zeigt sich, dass die Abstützkralle 8 an zwischen den Krallenarmen 9 liegenden Positionen, also Positionen, an denen eine Außenkontur des ersten Abstützelements 4 in Richtung der Verdrehachse 10 zurücktritt, Verrastrücksprünge 32 aufweist, in die die Rastnasen 23 des Führungselements 14 einrastbar sind. Damit können das erste Abstützelement 4 und das Führungselement 14 gegeneinander verdrehsicher aneinander verrastet sein. Desweiteren weist die Abstützkralle 8 eine zentrische, kreisrunde Ausnehmung 33, hier eine Bohrung 34 auf, in die die Schraube 20 einführbar ist. Der Durchmesser der Bohrung 34 beziehungsweise der Ausnehmung 33 entspricht in etwa dem Durchmesser der Schraube 20. Eine der Bohrung 34 benachbarte Oberfläche der Abstützkralle 8 bildet eine Auflagefläche 35 aus, mit der der Kopf 21 der Schraube 20 der zur Spanneinrichtung 6 gehörenden Verschraubung 7 in Flächenkontakt treten kann. Es zeigt sich, dass der Außenumfang des ersten Abstützelements 4 im Wesentlichen stetig verläuft, mit Ausnahme der Verrastrücksprünge 32 und den Enden 13 der Krallenarme 9. Es kann aber auch eine andere Form vorgesehen sein, insbesondere eine Form, in der auf die Aufsetzkante 24 wirkenden Kräfte ideal in dem ersten Abstützelement 4 verteilt werden.

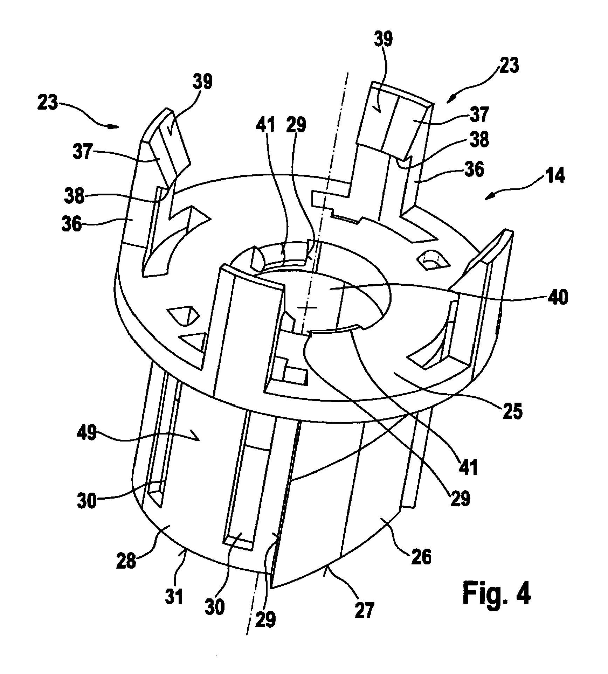

Figur 4 zeigt eine Detailansicht des Führungselements 14. Insbesondere sind die Rastnasen 23 zu erkennen, die zu einer Verrastung des Führungselements 14 mit dem ersten Abstützelement 4, also der Abstützkralle 8, dienen. Die Rastnasen 23 sind über den Umfang des Halterings 25 verteilt angeordnet. Sie können dabei, wie dargestellt, den äußersten Umfang des Halterings 25 definieren. Sie weisen einen elastischen Rastkörper 36 und eine Rastzunge 37 auf. Die Rastzunge 37 bildet, da sie an einer an den Rastkörper 36 grenzenden Fläche eine größere Dicke aufweist, einen Rastvorsprung 38 aus. In Richtung des freistehenden Endes der Rastnase 23 verjüngt sich die Rastzunge 37, beispielsweise wie hier dargestellt stetig, so dass eine schräge Einrastfläche 39 ausgebildet ist. An einem unteren Ende des Führungselements 14 sind, wie bereits für Figur 2 beschreiben, die Absenkführung 26 sowie die Verdrehführung 28 vorgesehen. Zusätzlich zu der Verdrehanschlagsfläche 29 der Verdrehführung 28 ist in einer zentrischen kreisrunden Ausnehmung 40 eine weitere Verdrehendanschlagseinrichtung 41 vorgesehen. Diese weist weitere Verdrehendanschlagsflächen 29 auf. Die Ausnehmung 40 kann im Wesentlichen einen größeren Durchmesser auf als die Ausnehmung 33 des ersten Abstützelements 4 aufweisen. Zumindest weist sie eine radiale Dicke auf, die abzüglich einer Dicke der Verdrehendanschlagseinrichtung 41 mindestens einem Durchmesser der Schraube 20 entspricht.

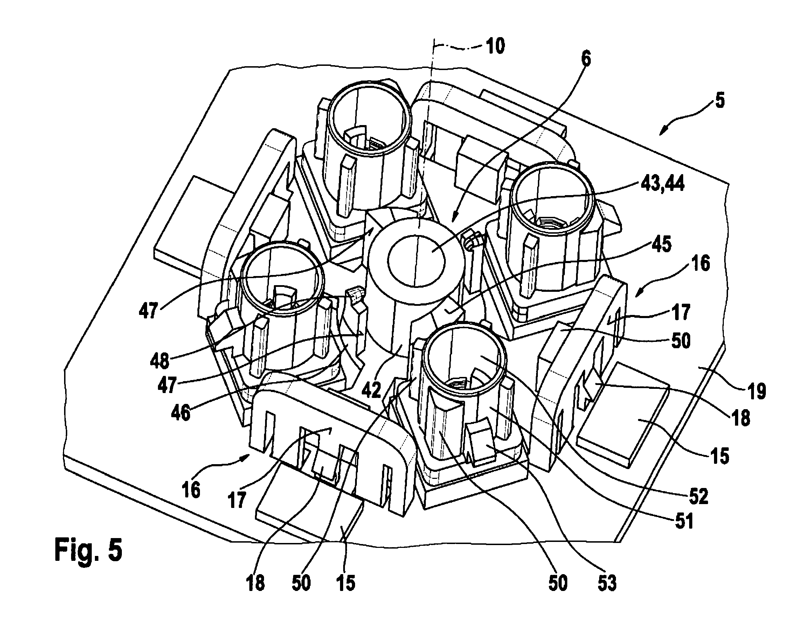

Figur 5 zeigt eine vergrößerte Detailansicht des zweiten Abstützelements 5, wobei nur ein Ausschnitt desselben dargestellt ist. Erkennbar ist die zentrisch angeordnete Spanneinrichtung 6, die im Fall des zweiten Abstützelements 5 durch ein Aufnahmeelement 42 für die Verschraubung 7 gekennzeichnet ist. Das Aufnahmeelement 42 ist im Wesentlichen zentrisch angeordnet und weist in seiner Mitte eine Ausnehmung 43 mit einem Innengewinde 44 auf, in das das Gewinde 22 der Schraube eingreifen kann. An dem Aufnahmeelement 42 sind auch mit den Vertikalendanschlagsflächen 31 zusammenwirkende Vertikalführungsflächen 45 vorgesehen. Diese sind in einem Winkel zur Oberfläche des zweiten Abstützelements 5 angewinkelt, der im Wesentlichen einem Winkel der Absenkführungsfläche 27 gegenüber dem Führungselement 14 entspricht. Das Aufnahmeelement 42 weist einen äußeren Durchmesser auf, der einem inneren Durchmesser eines unteren Teils des Führungselements 14 beziehungsweise einem inneren Durchmesser von Absenkführung 26 und/oder Verdrehführung 28 im Wesentlichen entspricht. In einem Abstand zu dem Aufnahmeelement 42, der im Wesentlichen einer Dicke der Verdrehführung 28 entspricht, ist ein Verdrehführungsgegenelement 46 positioniert. Dieses weist zumindest eine Verdrehendanschlagsgegenfläche 47, die mit der Verdrehendanschlagsfläche 29 korrespondieren beziehungsweise in flächigen Kontakt treten kann. Weiterhin ist an dem Verdrehführungsgegenelement 46 eine Verdrehrastnase 48 vorgesehen, die in den Verdrehrastausnehmungen 30 verrastbar ist. Zu diesem Zweck ist das Verdrehführungsgegenelement 46 elastisch ausgebildet, so dass die Verdrehrastnase 48 sowohl auf einer Oberfläche 49 der Verdrehführung 28 (siehe Figur 4) laufen als auch in die Verdrehrastausnehmungen 30 rastend eingreifen kann. Sowohl Aufnahmeelement 42 als auch Verdrehführungsgegenelement 46 sind auf der Grundplatte 19 des zweiten Abstützelements 5 angeordnet. Wie bereits anhand Figur 1 ausgeführt, sind auf dieser Grundplatte 19 ebenfalls Auflageflächen 15 und Vorverrastungen 16 mit Führungsflächen 17 und Rastfedernasen 18 vorgesehen. Zur Erhöhung der Festigkeit der Vorverrastung 16 können Versteifungselemente 50 vorgesehen sein, die beispielsweise hinter der Vorverrastung 16 positioniert sind und Stabilität und Steifigkeit der Vorverrastung 16 erhöhen. Desweiteren sind auf der Grundplatte 19 Führungsvorrichtungen 51 vorgesehen, die beispielsweise eine die Grundplatte 19 durchgreifende Ausnehmung 52 aufweisen. Diese Ausnehmung 52 kann beispielsweise als Steckverbinder oder zur Kabelführung verwendet werden. An den Führungsvorrichtungen 51 sind Rastvorrichtungen 53 vorgesehen, über die ein nicht dargestelltes Kraftfahrzeug-Anbauteil auf die Halterung 1 beziehungsweise das zweite Abstützelement 5 aufgeclipst und mit diesem verrastet werden kann. Analog zu den Rastnasen 23 des Führungselements 14 weisen die Rastvorrichtungen 53 eine Schrägfläche und einen Rastvorsprung auf, über die ein einfaches Aufschieben des Kraftfahrzeug-Anbauteils und eine sichere Verrastung gewährleistet sind. Zur Erhöhung der Stabilität der Führungsvorrichtungen 51 können auch hier Versteifungselemente 50 vorgesehen sein. Vorstellbar ist auch, dass diese Versteifungselemente 50 der Führungsvorrichtung 51 gegenüber dem Kraftfahrzeug-Anbauteil eine Führungsfunktion einnehmen und dieses beispielsweise in radialer Richtung vor einem Verschieben sichern.

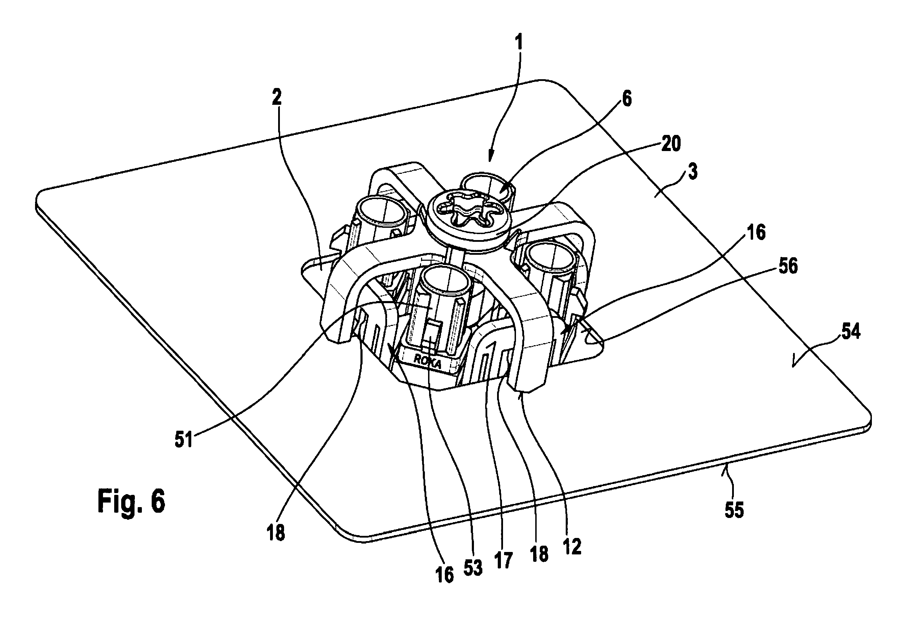

Figur 6 zeigt die Halterung 1 in Zusammenbauposition an einem Karosserieteil 3, das hier ausschnittsweise dargestellt ist. Es ist erkennbar, dass sich das erste Abstützelement 4 beziehungsweise die Abstützkralle 8 nun in einer zweiten Winkelstellung befindet. In dieser liegen die Abstützflächen 12 idealerweise gegenüber der Auflagefläche 15, die sich in Figur 6 unterhalb des Karosserieteils 3 befinden und daher nicht zu erkennen sind. In dieser Zusammenbauposition greifen die Rastfedernasen 18 der Vorverrastung 16 über den oberen Rand des Karosserieteils 3 und sorgen für eine erste Fixierung der Halterung 1 in der Aufnahmeöffnung 2 des Karosserieteils 3. Eine endgültige Fixierung der Halterung 1 ist bei Verspannung des ersten Abstützelements 4 gegenüber dem zweiten Abstützelement 5 mit Hilfe der Spanneinrichtung 6 erreichbar. In Zusammenbauposition, wie in Figur 6 dargestellt, ist die Schraube 20 angezogen, womit die Abstützflächen 12 beziehungsweise die Aufsetzkanten 24 gegen das Karosserieteil 3 treten und so für eine Verspannung sorgen.

Nachfolgend soll kurz auf die Funktionen während des Zusammenbaus eingegangen werden. Zu diesem Zweck werden die Figur 1 (vor einer Montage) sowie Figur 6 (Zusammenbauposition) herangezogen. Wie in Figur 1 erkennbar, ist das erste Abstützelement 4 der Halterung 1 beziehungsweise die Abstützkralle 8 zunächst um 45° gegenüber dem zweiten Abstützelement 5 bezüglich der Verdrehachse 10 verdreht. Das bedeutet, dass die Abstützflächen 12 nicht über den Auflageflächen 15 positioniert sind, sondern in einem gewissen Abstand von diesen. In diesem Zustand, einem Auslieferungszustand, in dem bereits das erste Abstützelement 4 an dem zweiten Abstützelement 5 mittels der Spanneinrichtung 6 befestigt ist, kann die Halterung 1 in die Aufnahmeöffnung 2 eingeschoben werden. Dabei wird das erste Abstützelement 4 durch die Aufnahmeöffnung 2 hindurchbewegt, bis die Auflageflächen 15 auf einer Seite des Karosserieteils 3 mit dessen zweiter Oberfläche 55 in Kontakt, insbesondere Flächenkontakt, treten. Während des Einführungsvorgangs wurden die elastischen Rastfedernasen 18 der Vorverrastung 16 radial nach Innen gedrückt und können, sobald eine ausreichende Einführungstiefe der Halterung 1 in die Aufnahmeöffnung 2 des Karosserieteils 3 erreicht ist, sich wieder elastisch nach Außen entspannen. Damit ist eine erste Fixierung der Halterung 1 in der Aufnahmeöffnung 2 erreicht, da sich die Halterung 1 nun nicht mehr ohne Weiteres aus der Aufnahmeöffnung 2 lösen kann. Nachfolgend wird die Spanneinrichtung 6 verwendet, um eine endgültige Fixierung herzustellen. Dazu wird die Schraube 20 gedreht. Dadurch wird eine translatorische Bewegung des ersten Abstützelements 4 hin zu dem zweiten Abstützelement 5 bewirkt, da diese von der Schraube 20 aufeinander zu bewegt werden. Da die Absenkführungsfläche 27 auf der Vertikalführungsfläche 45 aufliegt, muss eine Rotationsbewegung des Führungselements 14 einsetzen, um die Vertikalbewegung der Spanneinrichtung 6 zu ermöglichen. Diese Rotationsbewegung des Führungselements 14 bewirkt auch eine Rotationsbewegung der an diesem befestigten Abstützkralle 8 beziehungsweise des ersten Abstützelements 4. Absenkführungsflächen 27 und Vertikalflächen 45 sind derart ausgelegt, dass das erste Abstützelement eine Drehbewegung derart beschreibt, dass die Abstützflächen 12 über den Auflageflächen 15 positioniert werden. Ist dieser Zustand erreicht, bewirkt eine weitere translatorische Bewegung des ersten Abstützelements 4 hin zum zweiten Abstützelement 5 keine weitere Drehbewegung. Zu diesem Zweck sind die Verdrehanschlagsflächen 29 vorgesehen, die ab diesem Zeitpunkt in Kontakt mit den Verdrehendanschlagsgegenflächen 48 treten und eine weitere Rotation verhindern. Gleiches gilt für die Verdrehanschlagseinrichtung 41, die gegen eine Verdrehendanschlagsgegenfläche 47 bewegt wurde und nun mit dieser in Kontakt steht. Um vor der Montage ein versehentliches Verdrehen des ersten Abstützelements 4 zu verhindern, sind die Verdrehrastnasen 48 vorgesehen, die in einer ersten Winkelstellung in einer der Verdrehrastausnehmungen 30 eingerastet ist. Durch die Rotationsbewegung kann mit einem gewissen Kraftaufwand die Verdrehrastnase 48 aus der Verdrehrastausnehmung 30 austreten und nachfolgend auf einer Oberfläche 49 der Verdrehführung 28 laufen, bis die zweite Verdrehrastausnehmung 30 erreicht ist. In diese rastet die Verdrehrastnase 48 wiederum ein. Dies wird bei Abschluss der Drehbewegung, also üblicherweise bei einer Verdrehung des ersten Abstützelements 4 um 45° gegenüber dem zweiten Abstützelement 5 der Fall sein. Somit ist also über den Kontakt zwischen Verdrehendanschlagsfläche 29 und Verdrehendanschlagsgegenfläche 47 ein Weiterdrehen des ersten Abstützelements 4 und durch das Einrasten der Verdrehrastnase 48 in die Verdrehrastausnehmung 30 ein allzu leichtgängiges Rückdrehen verhindert. Nach einem ersten Spannen mit Hilfe der Spanneinrichtung 6, also einem Aufeinanderzubewegen des ersten Abstützelements 4 auf das zweite Abstützelement 5 ist die Rotationsbewegen des ersten Abstützelements 4 somit abgeschlossen. Ab diesem Zeitpunkt erfolgt durch Weiterdrehen der Schraube 20 lediglich eine translatorische Aufeinanderzubewegung der Abstützelemente 4 und 5. Durch diese werden die Abstützflächen 12 auf die erste Oberfläche 54 des Karosserieteils 3 bewegt, während die Auflagefläche 15 auf der gegenüberliegenden Seite des Karosserieteils mit der zweiten Oberfläche 55 in Kontakt treten. Nachfolgend der Rotationsbewegung liegen wie beschrieben die Abstützflächen 12 idealerweise gegenüber der Auflagefläche 15. Ein weiteres Anziehen der Schraube 20 verspannt also das Karosserieteil 3 zwischen Abstützflächen 12 und Auflageflächen 15 und stellt somit eine sichere Befestigung der Halterung 1 an dem Karosserieteil 3 her. Damit ist die Einbauposition gemäß Figur 6 erreicht. Nachfolgend kann nun mit Hilfe der Rastvorrichtung 53 der Führungsvorrichtung 51, das Kraftfahrzeug-Anbauteil (nicht dargestellt) an der Halterung 1 befestigt beziehungsweise darauf aufgeclipst werden. Die Führungsflächen 17 treten in der Einbauposition mit Innenflächen 56 der Aufnahmeöffnung 3 in Kontakt und verhindern zusätzlich zu der Verspannung der Abstützelemente 4 und 5 eine Verschiebung der Halterung 1 in radialer Richtung. Die Aufnahmeöffnung 2 ist in diesem Ausführungsbeispiel als Mehreckloch ausgeführt, da in diesem Fall das erste Abstützelement 4 in seiner ersten Winkelstellung durch die Diagonale der Aufnahmeöffnung 2 eingeführt wird, während nach einer Rotationsbewegung des ersten Abstützelements 4 die Abstützflächen 12 in Verbindung mit der ersten Oberfläche 54 des Karosserieteils 3 stehen.

## Patentansprüche

1. Halterung (1) für ein Kraftfahrzeug-Anbauteil zur Montage an einem mit einer Aufnahmeöffnung (2) versehenen Karosserieteil (3) des Kraftfahrzeugs, mit zwei, entgegengesetzten Seiten des Karosserieteils (3) zuordenbaren Abstützelementen (4, 5), die mittels einer Spanneinrichtung (6) aufeinander zu spannbar sind, wobei eines der Abstützelemente (4, 5) ein erstes Abstützelement (4) bildet, das starr ausgebildet, um eine Verdrehachse (10) verdrehbar gelagert und über seinen um die Verdrehachse (10) verlaufenden Umfang herum mehrere zueinander separierte Abstützflächen (12) aufweist, wobei die Außenkontur des ersten Abstützelements (4) zwischen den Abstützflächen (12) in Richtung auf die Verdrehachse (10) zurücktritt und das andere Abstützelement (5, 4) ein zweites Abstützelement (5) bildet, **dadurch gekennzeichnet, dass** das zweite Abstützelement (5) Auflageflächen (15) aufweist und dass das erste Abstützelement (4) vor einem Montagevorgang eine erste Winkelstellung einnimmt, in der die Abstützflächen (12) nicht über den Auflageflächen (15) positioniert sind, und nach dem Montagevorgang eine zweite, von der ersten Winkelstellung verschiedene Winkelstellung einnimmt.

2. Halterung nach Anspruch 1, **dadurch gekennzeichnet, dass** das erste Abstützelement (4) als Abstützkralle (8) mit mehreren Krallenarmen (9) ausgebildet ist.

3. Halterung nach einem oder mehreren der vorhergehenden Ansprüche, **dadurch gekennzeichnet, dass** an den Enden (13) der Krallenarme (9) die Abstützflächen (12) liegen.

4. Halterung nach einem oder mehreren der vorhergehenden Ansprüche, **dadurch gekennzeichnet, dass** die Abstützkralle (8) sternförmig ausgebildet ist.

5. Halterung nach einem oder mehreren der vorhergehenden Ansprüche, **dadurch gekennzeichnet, dass** dem zweiten Abstützelement (5) eine Vorverrastung (16) zum Halten an einer Aufnahmeöffnung (2) zugeordnet ist.

6. Halterung nach einem oder mehreren der vorhergehenden Ansprüche, **dadurch gekennzeichnet, dass** die Vorverrastung (16) mindestens eine Rastfedernase (18) aufweist.

7. Halterung nach einem oder mehreren der vorhergehenden Ansprüche, **dadurch gekennzeichnet, dass** die Spanneinrichtung (6) eine Verschraubung (7) ist.

8. Halterung nach einem oder mehreren der vorhergehenden Ansprüche, **dadurch gekennzeichnet, dass** das erste Abstützelement (4) durch die Spanneinrichtung (6) in die zweite Winkelstellung drehbar ist.

9. Halterung nach einem oder mehreren der vorhergehenden Ansprüche, **dadurch gekennzeichnet, dass** das erste Abstützelement (4) in der ersten und der zweiten Winkelstellung mittels einer Rasteinrichtung verrastbar ist.

10. Vorrichtung zum Halten eines Kraftfahrzeug-Anbauteils, mit einer Halterung (1), nach einem oder mehreren der vorherigen Ansprüche, und mit einem Karosserieteil (3) des Kraftfahrzeugs, wobei das Karosserieteil (3) eine nicht rotationssymmetrische Aufnahmeöffnung (2) aufweist, wobei die Halterung (1) ein verdrehbar gelagertes Abstützelement (4, 5) aufweist, das in einer ersten Winkelstellung die Aufnahmeöffnung (2) passieren kann und sich in einer zweiten Winkelstellung auf einem Randbereich der Aufnahmeöffnung (2) abstützt.

11. Vorrichtung nach Anspruch 10, **dadurch gekennzeichnet, dass** die Aufnahmeöffnung (2) als Mehreckloch, insbesondere Viereckloch, ausgebildet ist.

## Claims

1. Holder (1) for a motor vehicle add-on part for assembly on a motor vehicle body part (3) which is provided with a receiving opening (2), comprising two support elements (4, 5) which can be assigned to opposite sides of the body part (3) and can be clamped together by means of a clamping apparatus (6), wherein one of the support elements (4, 5) forms a first support element (4) which is rigidly formed, mounted rotatably about an axis of rotation (10) and has a plurality of supporting surfaces (12) spaced apart along its circumference which extends about the axis of rotation (10), wherein the outer contour of the first support element (4) recedes between the supporting surfaces (12) in the direction of the axis of rotation (10) and the other support element (5, 4) forms a second support element (5), **characterised in that** the second support element (5) has contact surfaces (15), and **in that** the first support element (4) occupies a first angular position before an assembly operation, in which position the supporting surfaces (12) are not positioned over the contact surfaces (15), and occupies a second angular position, which is different from the first angular position, after the assembly operation.

2. Holder according to claim 1, **characterised in that** the first support element (4) is formed as a support claw (8) having a plurality of claw arms (9).

3. Holder according to one or more of the preceding claims, **characterised in that** the supporting surfaces (12) are located on the ends (13) of the claw arms (9).

4. Holder according to one or more of the preceding claims, **characterised in that** the support claw (8) is configured in the shape of a star.

5. Holder according to one or more of the preceding claims, **characterised in that** a pre-catch mechanism (16) for holding onto a receiving opening (2) is assigned to the second support element (5).

6. Holder according to one or more of the preceding claims, **characterised in that** the pre-catch mechanism (16) has at least one latching spring lug (18).

7. Holder according to one or more of the preceding claims, **characterised in that** the clamping apparatus (6) is a screw connection (7).

8. Holder according to one or more of the preceding claims, **characterised in that** the first support element (4) can be rotated into the second angular position by the clamping apparatus (6).

9. Holder according to one or more of the preceding claims, **characterised in that** the first support element (4) can be engaged in the first and the second angular position by means of a latching apparatus.

10. Device for holding a motor vehicle add-on part, comprising a holder (1), according to one or more of the preceding claims, and comprising a motor vehicle body part (3), wherein the body part (3) has a non-rotationally symmetrical receiving opening (2), wherein the holder (1) has a rotatably mounted support element (4, 5) which can pass through the receiving opening (2) in a first angular position and supports itself on an edge region of the receiving opening (2) in a second angular position.

11. Device according to claim 10, **characterised in that** the receiving opening (2) is formed as a polygonal hole, in particular as a quadrilateral hole.

## Revendications

1. Monture (1) pour une pièce rapportée d'un véhicule, destinée au montage sur une partie de carrosserie (3), dotée d'une ouverture de réception (2), du véhicule, comprenant deux éléments de soutien (4, 5) à associer à deux côtés opposés de la partie de carrosserie (3), ces éléments pouvant être serrés l'un vers l'autre au moyen d'un dispositif de serrage (6), de sorte que l'un des éléments de soutien (4, 5) forme un premier élément de soutien (4) réalisé de manière rigide, monté en rotation autour d'un axe de rotation (10) et présentant sur sa périphérie s'étendant autour de l'axe de rotation (10) plusieurs surfaces de soutien (12) séparées les unes des autres, telles que le contour extérieur du premier élément de soutien (4) est en retrait entre les surfaces de soutien (12) en direction de l'axe de rotation (10) et l'autre élément de soutien (5, 4) forme un second élément de soutien,
**caractérisée en ce que** le second élément de soutien (5) présente des surfaces d'appui (15), et **en ce que** le premier élément de soutien (4) occupe, avant un processus de montage, une position angulaire dans laquelle les surfaces de soutien (12) ne sont pas positionnées au-dessus des surfaces d'appui (15) et occupe, après le processus de montage, une seconde position angulaire différente de la première position angulaire.

2. Monture selon la revendication 1, **caractérisée en ce que** le premier élément de soutien (4) est réalisé sous forme de griffe de soutien (8) avec plusieurs bras-griffes (9).

3. Monture selon l'une ou plusieurs des revendications précédentes, **caractérisée en ce que** les surfaces de soutien (12) sont disposées aux extrémités (13) des bras-griffes (9).

4. Monture selon l'une ou plusieurs des revendications précédentes, **caractérisée en ce que** la griffe de soutien (8) est réalisée en forme d'étoile.

5. Monture selon l'une ou plusieurs des revendications précédentes, **caractérisée en ce qu'**un moyen de pré-enclenchement (16) est associé au second élément de soutien (5) pour le maintien sur une ouverture de réception (2).

6. Monture selon l'une ou plusieurs des revendications précédentes, **caractérisée en ce que** le moyen de pré-enclenchement (16) comprend au moins un ergot-ressort (18) d'enclenchement.

7. Monture selon l'une ou plusieurs des revendications précédentes, **caractérisée en ce que** le dispositif de serrage (6) est un vissage (7).

8. Monture selon l'une ou plusieurs des revendications précédentes, **caractérisée en ce que** le premier élément de soutien (4) est susceptible d'être tourné vers la seconde position angulaire par le dispositif de serrage (6).

9. Monture selon l'une ou plusieurs des revendications précédentes, **caractérisée en ce que** le premier élément de soutien (4) est susceptible d'être enclenché au moyen d'un dispositif d'enclenchement dans la première et dans la seconde position angulaire.

10. Dispositif pour maintenir une pièce rapportée d'un véhicule, comprenant une monture (1) selon l'une ou plusieurs des revendications précédentes, et comprenant une partie de carrosserie (3) du véhicule, dans lequel la partie de carrosserie (3) comporte une ouverture de réception (2) qui ne présente pas de symétrie de révolution, ladite monture (1) comprenant un élément de soutien (4, 5) monté avec faculté de rotation, qui est capable de traverser l'ouverture de réception (2) dans une première position angulaire, et qui est soutenu sur une zone de bordure de l'ouverture de réception (2) dans une seconde position angulaire.

11. Dispositif selon la revendication 10, **caractérisé en ce que** l'ouverture de réception (2) est réalisée sous forme de trou polygonal, en particulier sous forme de trou quadrangulaire.
